# EUROPEAN PATENT SPECIFICATION

(11) **EP 0 860 061 B1**
(45) Date of publication and mention of the grant of the patent: **19.01.2000**
(21) Application number: 96938308.2
(22) Date of filing: 08.11.1996
(51) Int. Cl.: H04B 7/26

(54) **DIGITAL TELEPHONY USING CONTROL MESSAGES TRANSMITTED IN TIME SLOTS FOR RF FREQUENCY ALLOCATION**
DIGITALE TELEFONIE MIT IN ZEITSCHLITZEN GESENDETEN KONTROLLNACHRICHTEN ZUR HF-FREQUENZZUTEILUNG
TELEPHONIE NUMERIQUE UTILISANT DES MESSAGES DE COMMANDE TRANSMIS EN TRANCHES DE TEMPS POUR L'ATTRIBUTION DE FREQUENCES H.F.

(30) Priority: 10.11.1995 GB 9523041; 13.02.1996 GB 9602965; 02.10.1996 GB 9620507
(43) Date of publication of application: 26.08.1998
(73) Proprietor: Ionica International Limited, Cambridge CB4 4AS (GB)
(72) Inventor: MARTIN, Paul Maxwell, Newmarket, Suffolk CB8 9XS (GB); GOODINGS, Rupert Leslie Alexander, Cambridge CB4 1DD (GB); SHORE, Christopher John, Cambridge CB4 1UP (GB)
(74) Representative: Hogg, Jeffery Keith
(86) International application number: GB9602750
(87) International publication number: WO9717772

(56) References cited:
- EP-A- 0 282 087
- WO-A-95/19084
- US-A- 4 166 927
- US-A- 5 142 691

## Description

This invention relates to digital data and control message transmission in predetermined time slots within fixed length time frames.

US5,142,691 discloses a wireless TDMA communication system that shares frequency assignment with existing radio frequency systems and scans a set of possible operating frequencies for signals transmitted by the other systems. This data is sent over a telephone line to a frequency management centre where a safe operating frequency is assigned.

WO95/19084 discloses a non-TDMA cordless telephone set which during periods of inactivity monitors its currently tuned RF channel and upon detection of noise interference or occupation of the currently tuned RF channel, initiates a fast scan generation to identify an unoccupied and relatively interference-free RF channel, and returns the telephone set to the newly identified RF channel.

The present invention relates to a method of transmitting control messages in predetermined time slots within fixed length time frames from a first transmitting and receiving unit to a second transmitting and receiving unit, the control messages being for controlling the second unit, the second unit listening on a selected RF carrier frequency for an incoming message at a time waiting to receive, the selected RF carrier frequency being selected from the class of RF frequencies both available and most preferred for use, the RF frequencies being classified dependent on whether communications on previously selected carrier frequencies have been successful.

Preferably the carrier radio frequencies assigned to a first unit are classified as preferred for use, less preferred for use, and least preferred for use. If an RF carrier frequency classed as preferred for use is not selectable, an RF carrier frequency less preferred is attempted to be selected. If no RF carrier frequency classed as less preferred is selectable, the second unit scans all RF carrier frequencies assigned to the network of first and second units to determine an RF carrier frequency usable for transmissions by the first unit on which to listen.

The second unit is preferably a subscriber unit, and the first unit is preferably a base station. Transmission is preferably by radio. The second unit preferably listens for call set up requests or short messages. Where there is a plurality of second units for communication with the first unit, the carrier radio frequencies are classified for each second unit, for example, a particular radio frequency can be preferred for use in communication by one second unit but not another.

The invention also relates to a corresponding method of receiving digital data signals, a receiver, and communication means comprising a first unit and a plurality of second units.

A preferred embodiment of the invention will now be described, by way of example, and with reference to the accompanying drawings in which:
Figure 1 is a schematic diagram illustrating the system including a base station (BTE -Base Terminating Equipment) and subscriber unit (NTE - Network Terminating Equipment);
Figure 2 is a diagram illustrating frame structure and timing for a duplex link;
Figure 3 is a diagram representing a slot-list message from a base station.

### The Basic System

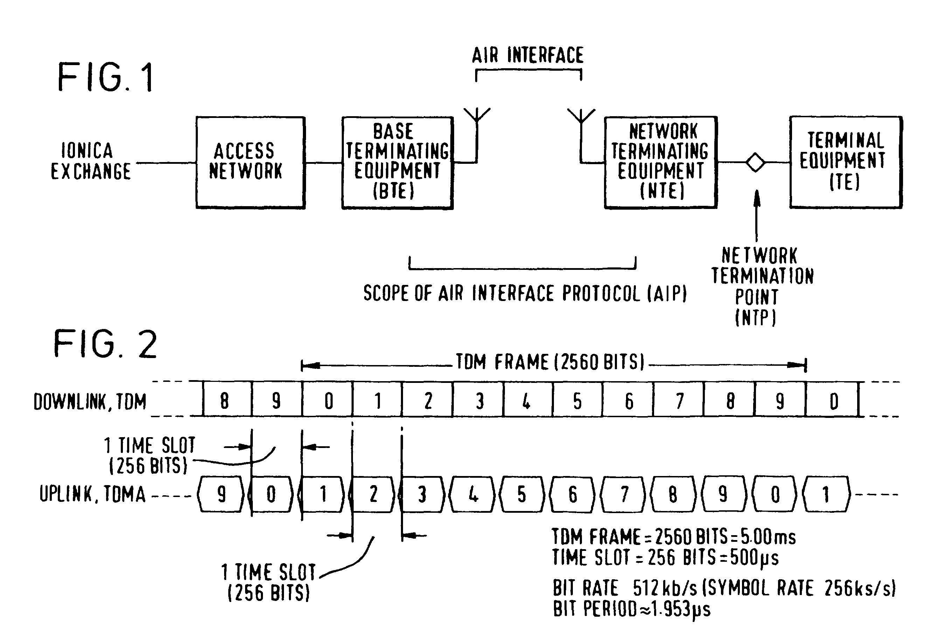

As shown in Figure 1, the preferred system is part of a telephone system in which the local wired loop from exchange to subscriber has been replaced by a full duplex radio link between a fixed base station and fixed subscriber. The preferred system includes the duplex radio link, and transmitters and receivers for implementing the necessary protocol. There are similarities between the preferred system and digital cellular mobile telephone systems such as GSM which are known in the art. This system uses a protocol based on a layered model, in particular one having the following layers: PHY (Physical), MAC (Medium Access Control), DLC (Data Link Control), NWK (Network). One difference compared with GSM is that, in the preferred system, subscriber units are at fixed locations and there is no need for hand-off arrangements or other features relating to mobility. This means, for example, in the preferred system, directional antennae and mains electricity can be used.

Each base station in the preferred system provides six duplex radio links at twelve frequencies chosen from the overall frequency allocation, so as to minimise interference between base stations nearby. The frame structure and timing for the duplex link is illustrated in Figure 2. Each duplex radio link comprises an up-link from a subscriber unit to a base station and, at a fixed frequency offset, a down-link from the base station to the subscriber unit. The down-links are TDM, and the up-links are TDMA. Modulation for all links is π/4 - DQPSK, and the basic frame structure for all links is ten slots per frame of 2560 bits, i.e. 256 bits per slot. The bit rate is 512kbps. Down-links are continuously transmitted and incorporate a broadcast channel for essential system information. When there is no useful information to be transmitted, the downlink transmission continues to use the basic frame and slot structure and contain a suitable fill pattern and essential broadcast channel.

For both up-link and down-link transmissions, there are two types of slot: normal slots, which are used after call set-up, and pilot slots which are used during call set-up.

Each down-link normal slot comprises 24 bits of synchronisation information followed by 24 bits designated S-field which includes an 8 bit header, followed by 160 bits designated D-field. This is followed by 24 bits of Forward Error Correction, and an 8 bit tail, followed by 12 bits of broadcast channel. Each broadcast message consists of ten 12 bit segments taken from each downlink slot. When assembled into a 120 bit message, the broadcast message consists of 104 bits of data, 14 bits of Forward Error connection and 2 padding bits. In the 104 bits of data, there is a 16 bit Cyclic Redundancy Check (CRC). The broadcast channel consists of segments in each of the slots within a frame which together form the down-link common signalling channel which is transmitted by the base station, and contains control messages containing link information such as slot lists, multiframe and super-frame information and other information, connectionless messages and information basic to the operation of the system.

During call set-up, each down-link slot contains frequency correction data and/or a training sequence for receiver initialisation with only a short S- field and no D- field information.

Up-link slots basically contain two different types of data packet. The first type of packet, called a pilot packet, is used before a connection is set up, for example, for an ALOHA call request and to allow adaptive time alignment. The other type of data packet, called a normal packet, is used when a call has been established and is a larger data packet, due to the use of adaptive time alignment.

Each up-link normal packet contains a data packet of 244 bits which is preceded and followed by a ramp of 4 bits duration. The ramps and the remaining bits left of the 256 bit slot provide a guard gap against interference from neighbouring slots due to timing errors. Each subscriber unit adjusts the timing of its slot transmissions to compensate for the time it takes signals to reach the base station. Each up-link data packet comprises 24 bits of synchronisation data followed by an S-field and D-field of the same number of bits as in each down-link normal slot.

Each up-link pilot slot contains a pilot data packet which is 92 bits long preceded and followed by 4 bit ramp defining an extended guard gap of 60 bits. This larger guard gap is necessary because there is no timing information available, and without it, propagation delays cause neighbouring slots to interfere. The pilot packet comprises 64 bits of sync followed by 104 bits of S-field which starts with an 8 bit header and finishes with a 16 bit Cyclic Redundancy Check 2 reserved bits, 14 forward error correction FEC bits, and 8 tail bits. There is no D-field.

The S-fields in the above mentioned data packets can be used for two types of signalling. The first type is MAC signalling (MS) and is used for signalling between the MAC layer of the base station and the MAC layer of a subscriber unit in which timing is important. The second type is called associated signalling, which can be slow or fast, and is used for signalling between the base station and the subscriber units in the DLC or NWK layers.

The D-field is the largest data field, and in the case of normal telephony contains digitised speech. but can also contain non-speech data samples.

Call requests are made in random access Aloha slots as described in more detail below. Provision is made in the preferred system for subscriber unit authorisation using a challenge response protocol. General encryption is provided by combining the speech or data with a non-predictable sequence of cipher bits produced by a key stream generator which is synchronised to the transmitted super-frame number.

In addition, the transmitted signal is scrambled to remove dc components.

### Contention Protocol

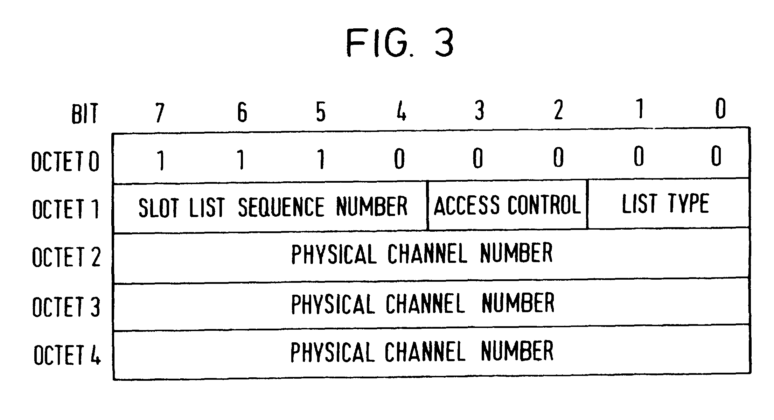

A slotted Aloha protocol is used by subscriber units to send call set-up requests and short information messages (Datagrams) to the base station. These requests and messages are sent in a pilot packet in one of a list of slots, known as Aloha slots, that have been designated as available for this purpose in a Slot-List broadcast by the base station. A typical slot-list broadcast is illustrated in Figure 3. A slot-list is valid for a multiframe, which consists of sixteen consecutive frames numbered 0 - 15, and is broadcast in one multiframe to be applicable to the following multiframe. The number of Aloha slots in a Slot-List may vary, and thus the message containing this information is of variable length and may need to be segmented into several slot-list messages for transmission in the broadcast channel. Each slot-list message may designate up to three Aloha slots, as shown in the Figure 3. A minimum number of slot-list messages are used, and these are each assigned a sequence number and are sent in ascending order, and are re-transmitted in the same order following complete transmission within the same multiframe. Sometimes, however, a single slot-list message will be sufficient to transmit the complete Slot-List.

The broadcast channel itself comprises a predetermined portion of each slot in every frame of the multiframe, and is used to broadcast various messages besides slot-list messages. Furthermore, different priorities are allocated to these different types of messages. Thus in frames 0 to 7 of a multiframe, slot-list messages have the lowest priority, and may not be transmitted because of the volume of other messages. However, slot-list messages are given a high priority in frames 8, 9, 12 and 13 so that transmission of at least a part, and most probably all, of the Slot-List is guaranteed.

The information in the Slot-List is encoded for reduced bandwidth, and has to be defined by reference to a Carrier-List which includes details of bearer frequencies. This Carrier-List is also transmitted in the broadcast channel in frame 15 of the multiframe preceding that in which the Slot-List is transmitted.

The base station sends information specific to each subscriber unit of which RF carrier frequencies are:
(i) preferred (the so-called 'white' channels)
(ii) to be used if a preferred rf frequency is not available (the so-called 'grey' channels)
(iii) not to be used (the so-called 'black' channels).

Each subscriber unit stores this information. Specifically, each subscriber unit maintains a Classified Carrier-List corresponding to the information received from the base station indicating radio frequencies that are preferred ("white"), frequencies that are only to be used due to the poor quality they provide if no preferred slot is available ("grey"), and frequencies which are not to be used ("black").

RF frequencies are categorised as 'black' if, for example, their use by a subscriber unit in one sector is likely to cause interference with transmissions from subscriber units in neighbouring sectors. RF frequencies are categorised as 'grey' where they provide poor quality but acceptable propagation.

### Updating the Classified Carrier List dependent on Call Success

The base station monitors, over time, the success of calls, which can be Public Switched Telephone Network (PSTN) calls and/or test calls on each RF frequency to each subscriber unit with which it communicates by radio. Where necessary an RF frequency is recategorised. For example, an RF frequency categorised as 'white' can be automatically reclassified as 'grey' should the frequency be unavailable for successful call transmission for more than a predetermined percentage of time. Conversely, 'grey' frequencies which are monitored as becoming sufficiently reliable are re-categorised as 'white'.

RF frequencies which are sufficiently unreliable, or cause interference are re-categorised as 'black'. The updated Classified Carrier list for each subscriber unit is updated periodically.

### The Waiting to Receive Mode of a Subscriber Unit

When a subscriber unit is not being used for calling, it remains in a state whereby it listens on a preferred RF carrier frequency for incoming paging messages on the broadcast channel. As mentioned above, the broadcast channel consists of segments of each of the time slots within a frame which together form a down-link (base station to subscriber unit) common signalling channel. Receiving a paging message indicates that a call should be set up.

The preferred RF carrier frequency on which to "camp", ie. listen for paging messages is normally one categorised as "white", however if that RF carrier frequency fails, a search of the other RF carrier frequencies categorised as "white" is automatically undertaken to determine whether any of these other RF carrier frequencies are suitable to be "camped" on. If so, one is selected. If no RF carrier frequencies categorised as "white" are available, a search of RF carrier frequencies categorised as "grey" is undertaken. If this also draws a null result, all of the possible RF carrier frequencies available to all base stations in the network are scanned to find an RF carrier frequency usable by the particular base station for communication with the subscriber unit.

Whether a particular RF carrier frequency should be camped on is determined by the subscriber unit which counts the number of cyclic redundancy check (CRC) errors in messages sent in the downlink common signalling channel (broadcast channel). If there are more than a threshold number of errors in a predetermined time then that RF carrier frequency is deemed unsatisfactory, and a different RF carrier frequency is tried.

In an alternative embodiment, errors are detected in Forward Error Correction (FEC) codes in messages sent on the broadcast channel to determine which RF carrier frequency is acceptable.

## Claims

1. A method of transmitting control messages in predetermined time slots within fixed length time frames from a first transmitting and receiving unit to a second transmitting and receiving unit, the control messages being for controlling the second unit, the second unit listening on a selected RF carrier frequency for an incoming message at a time waiting to receive, the selected RF carrier frequency being selected from the class of RF frequencies both available and most preferred for use, the RF frequencies being classified dependent on whether communications on previously selected carrier frequencies have been successful.

2. A method of transmitting control messages according to claim 1, in which the control messages comprise data of the availability of RF carrier frequencies to the second unit for communication with the first unit, the availability data being updated dependent on whether communication on the or each selected RF carrier frequency has been successful, the availability data being retransmitted from time to time to update the second unit.

3. A method of transmitting control messages according to claim 1 or claim 2, in which the carrier radio frequencies assigned to a first unit are each classified as preferred for use, less preferred for use, or least preferred for use.

4. A method of transmitting control messages according to any of claims I to 3, in which if an RF carrier frequency classed as preferred for use is not selectable, an RF carrier frequency less preferred is attempted to be selected.

5. A method of transmitting control messages according to claim 4, in which if no RF carrier frequency classed as preferred or less preferred is selectable, the second unit scans all RF carrier frequencies assigned to the network of first and second units to determine an RF carrier frequency usable for transmissions by the first unit on which to listen.

6. A method of transmitting control messages according to any preceding claim in which the second unit is a subscriber unit, and the first unit is a base station.

7. A method of transmitting control messages according to any preceding claim, in which transmission is by radio.

8. A method of transmitting control messages according to any preceding claim, in which the second unit listens for a call set-up request or short message.

9. A method of transmitting control messages according to any preceding claim, in which there is a plurality of second units for communication with the first unit, the RF carrier frequencies being classified separately for each second unit.

10. A method of receiving control messages in predetermined time slots within fixed length time frames from a first transmitting and receiving unit at a second transmitting and receiving unit, the control messages being for controlling the second unit, the second unit listening on a selected RF carrier frequency for an incoming message at a time waiting to receive, the selected RF carrier frequency having been selected from the class of RF frequencies both available and most preferred for use, the RF frequencies being classified dependent on whether communications on previously selected carrier frequencies have been successful.

11. A method of receiving control messages according to claim 10, in which the control messages comprise data of the availability of RF carrier frequencies to the second unit for communication with the first unit, the availability data being updated dependent on whether communication on the or each selected RF carrier frequency has been successful, the availability data being received from time to time to update the receiver.

12. A method of receiving control messages according to claim 10 or claim 11, in which the carrier radio frequencies assigned to a first unit are classified as preferred for use, less preferred for use, and least preferred for use.

13. A method of receiving control messages according to any of claims 10 to 12, in which if an RF carrier frequency classed as preferred for use is not selectable, an RF carrier frequency less preferred is attempted to be selected.

14. A method of receiving control messages according to claim 13, in which if no RF carrier frequency classed as preferred or less preferred is selectable, the second unit scans all RF carrier frequencies assigned to the network of first and second units to determine an RF carrier frequency usable for transmissions by the first unit on which to listen.

15. A receiver operative to receive control messages in predetermined time slots within fixed length time frames from a transmitter, the control messages being for controlling the receiver, the receiver listening on a selected RF carrier frequency for an incoming message at a time waiting to receive, the selected RF carrier frequency being selected from the class of RF frequencies both available and most preferred for use, the RF frequencies being classified dependent on whether communications on previously selected carrier frequencies have been successful.

16. A receiver according to claim 15, in which the carrier radio frequencies are classified as preferred for use, less preferred for use, and least preferred for use.

17. A receiver according to claim 15 or claim 16, in which if an RF carrier frequency classed as preferred for use is not selectable, an RF carrier frequency less preferred is attempted to be selected.

18. A receiver according to claim 17, in which if no RF carrier frequency classed as less preferred is selectable the receiver scans all RF carrier frequencies assigned to a network including transmitters and other receivers to determine an RF carrier frequency on which to listen.

19. Communication means comprising a first transmitting and receiving unit and a plurality of second transmitting and receiving units, the first unit transmitting control messages in predetermined time slots within fixed length time frames to each second unit, the control messages being for controlling the receiving second units, each second unit listening on a selected RF carrier frequency for an incoming message at a time waiting to receive, the selected RF carrier frequency being selected from the class of RF frequencies both available and most preferred for use, the RF frequencies being classified dependent on whether communications on previously selected carrier frequencies have been successful.

20. Communication means according to claim 19, in which the control messages to a second unit comprise data of the availability of RF carrier frequencies to the second unit for communication with the first unit, the availability data being updated dependent on whether communication on the or each selected RF carrier frequency has been successful, the availability data being retransmitted from time to time to update the second unit.

21. Communication means according to claim 19 or claim 20, in which the carrier radio frequencies assigned to a second unit are classified as preferred for use, less preferred for use, and least preferred for use.

22. Communication means according to any of claims 19 to 21, in which if an RF carrier frequency classed as preferred for use is not selectable, an RF carrier frequency less preferred is attempted to be selected.

23. Communications means according to claim 22, in which if no RF carrier frequency classed as less preferred is selectable for transmission to one of the second units, the second unit scans all RF carrier frequencies assigned to the first and second units to determine an RF carrier frequency usable for transmissions by the first unit on which to listen.

24. Communication means according to any of claims 19 to 23, in which the RF frequencies are classified separately for each second unit.

## Patentansprüche

1. Verfahren zum Übertragen von Kontrollnachrichten in vorbestimmten Zeitschlitzen innerhalb von Zeitblöcken fester Länge von einer ersten an eine zweite Sende- und Empfangseinheit, wobei die Kontrollnachrichten zur Steuerung der zweiten Einheit dienen und die zweite Einheit auf einer gewählten HF-Trägerfrequenz zur Zeit der Empfangsbereitschaft auf eine ankommende Nachricht horcht, die gewählte HF-Trägerfrequenz aus der Klasse der sowohl verfügbaren und als auch zur Benutzung meistbevorzugten HF-Frequenzen gewählt wird und die Klassifizierung der HF-Frequenzen in Abhängigkeit davon erfolgt, ob die Nachrichtenverbundungen auf in der Vergangenheit gewählten Trägerfrequenzen erfolgreich waren.

2. Verfahren zum Übertragen von Kontrollnachrichten nach Anspruch 1, bei dem die Kontrollnachrichten Daten über die Verfügbarkeit von HF-Trägerfrequenzen für die zweite Einheit zwecks Verbindung mit der ersten Einheit aufweisen und die Verfügbarkeitsdaten abhängig davon aktualisiert werden, ob die Nachrichtenverbindungen auf der oder jeder gewählten HF-Trägerfrequenz erfolgreich waren, wobei die Verfügbarkeitsdaten von Zeit zu Zeit erneut gesendet werden, um die zweite Einheit zu aktualisieren.

3. Verfahren zum Übertragen von Kontrollnachrichten nach Anspruch 1 oder 2, bei dem die einer ersten Einheit zugewiesenen Träger-Funkfrequenzen jeweils als für die Benutzung bevorzugt, für die Benutzung weniger bevorzugt oder für die Benutzung am wenigsten bevorzugt klassifiziert werden.

4. Verfahren zum Übertragen von Kontrollnachrichten nach einem der Ansprüche 1 bis 3, bei dem, falls eine als bevorzugt klassifizierte HF-Trägerfrequenz nicht verfügbar ist, versucht wird, eine weniger bevorzugte HF-Trägerfrequenz zu wählen.

5. Verfahren zum Übertragen von Kontrollnachrichten nach Anspruch 4, bei dem, falls keine als bevorzugt oder weniger bevorzugt klassifizierte HF-Trägerfrequenz wählbar ist, die zweite Einheit alle dem Netz der ersten und zweiten Einheiten zugewiesenen HF-Trägerfrequenzen prüft, um eine von der ersten Einheit zum Senden benutzbare HF-Trägerfrequenz zu bestimmen, auf der gehorcht werden kann.

6. Verfahren zum Übertragen von Kontrollnachrichten nach einem der vorgehenden Ansprüche, bei dem die zweite Einheit eine Teilnehmer-Einheit und die erste Einheit eine Basisstation ist.

7. Verfahren zum Übertragen von Kontrollnachrichten nach einem der vorgehenden Ansprüche, bei dem die Übertragung per Funk erfolgt.

8. Verfahren zum Übertragen von Kontrollnachrichten nach einem der vorgehenden Ansprüche, bei dem die zweite Einheit nach einer Verbindungsaufbau-Anforderung oder einer Kurznachricht horcht.

9. Verfahren zum Übertragen von Kontrollnachrichten nach einem der vorgehenden Ansprüche, bei dem eine Vielzahl von zweiten Einheiten zur Verbindung mit der ersten Einheit vorliegt und die HF-Trägerfrequenzen für jede zweite Einheit separat klassifiziert werden.

10. Verfahren zum Empfangen von Kontrollnachrichten aus einer ersten Sende- und Empfangseinheit in vorbestimmten Zeitschlitzen innerhalb von Zeitblöcken fester Länge durch eine zweite Sende- und Empfangseinheit, wobei die Kontrollnachrichten zum Steuern der zweiten Einheit dienen und wobei weiterhin die zweite Einheit zu einer Zeit der Empfangsbereitschaft auf einer gewählten HF-Trägerfrequenz auf eine eingehende Nachricht horcht, die gewählte HF-Trägerfrequenz aus der Klasse der als sowohl verfügbar als auch zur Benutzung meistbevorzugt klassifizierten HF-Frequenzen gewählt und die HF-Frequenzen danach klassifiziert werden, ob die Verbindungen auf in der Vergangenheit gewählten Trägerfrequenzen erfolgreich waren.

11. Verfahren zum Empfangen von Kontrollnachrichten nach Anspruch 10, bei dem die Kontrollnachrichten Daten uber die Verfügbarkeit von HF-Trägerfrequenzen für die zweite Einheit zwecks Verbindung mit der ersten Einheit aufweisen, wobei die Verfügbarkeitsdaten in Abhängigkeit davon aktualisiert werden, ob die Verbindungen auf der oder auf jeder gewählten HF-Trägerfrequenz erfolgreich waren, und die Verfügbarkeitsdaten von Zeit zu Zeit zum Aktualisieren des Empfängers empfangen werden.

12. Verfahren zum Empfangen von Kontrollnachrichten nach Anspruch 10 oder Anspruch 11, bei dem die einer ersten Einheit zugewiesenen Funk-Trägerfrequenzen als zur Benutzung bevorzugt, zur Benutzung weniger bevorzugt und zur Benutzung am wenigsten bevorzugt klassifiziert werden.

13. Verfahren zum Empfangen von Kontrollnachrichten nach einem der Ansprüche 10 bis 12, bei dem, falls eine für die Benutzung bevorzugte HF-Trägerfrequenz nicht wählbar ist, versucht wird, eine weniger bevorzugte HF-Trägerfrequenz zu wählen.

14. Verfahren zum Empfangen von Kontrollnachrichten nach Anspruch 13, bei dem, falls keine als bevorzugt oder weniger bevorzugt klassifizierte HF-Trägerfrequenz wählbar ist, die zweite Einheit alle dem Netz der ersten und zweiten Einheiten zugewiesenen HF-Trägerfrequenzen prüft, um eine von der ersten Einheit zum Senden benutzbare HF-Trägerfrequenz zu bestimmen, auf der gehorcht werden kanr.

15. Empfänger, der betrieblich in vorbestimmten Zeitscnlitzen innerhalb von Zeitblöcken fester Länge von einem Sender Kontrollnachrichten empfangen kann, die zum Steuern des Empfängers dienen, wobei der Empfänger zu einem Zeitpunkt der Empfangsbereitschaft auf einer gewählten HF-Trägerfrequenz nach einer ankommenden Nachricht horcht, die gewählte HF-Trägerfrequenz aus der Klasse der sowohl verfügbaren als auch zur Benutzung meistbevorzugten HF-Frequenzen gewählt wird und die HF-Frequenzen danach klassifiziert werden, ob die Verbindungen auf in der Vergangenheit gewählten Trägerfrequenzen erfolgreich waren.

16. Empfänger nach Anspruch 15, bei dem die Funk-Trägerfrequenzen als für die Benutzung bevorzugt, für die Benutzung weniger bevorzugt und für die Benutzung am wenigsten bevorzugt klassifiziert werden.

17. Empfänger nach Anspruch 15 oder Anspruch 16, bei dem, falls eine als für die Benutzung bevorzugt klassifizierte HF-Trägerfreuenz nicht wählbar ist, versucht wird, eine weniger bevorzugte HF-Trägerfrequenz zu wählen.

18. Empfänger nach Anspruch 17, der, falls keine als weniger bevorzugt klassifizierte HF-Trägerfrequenz wählbar ist, alle einem Sender und Empfänger aufweisenden Netz zugewiesene HF-Trägerfrequenzen prüft, um eine zum Horchen geeignete HF-Trägerfrequenz zu bestimmen.

19. Nachrichtenübertragungseinrichtung mit einer ersten Sende- und Empfangseinheit und einer Vielzahl zweiter Sende- und Empfangseinheiten, bei der die erste Einheit in vorbestimmten Zeitschlitzen innerhalb von Zeitblöcken fester Länge an jede zweite Einheit Kontrollnachrichten sendet, die zum Steuern der empfangenden zweiten Einheiten dienen, wobei jede zweite Einheit zu einer Zeit der Empfangsbereitschaft auf einer gewählten HF-Trägerfrequenz nach einer ankommende Nachricht horcht und die gewählte HF-Trägerfrequenz aus der Klasse der als sowohl verfügbar als auch für die Benutzung meistbevorzugt klassifizierten HF-Trägerfrequenzen gewählt wird, wobei die HF-Frequenzen abhängig davon klassifiziert werden, ob Verbindungen auf in der Vergangenheit gewählten Träger frequenzen erfolgreich waren.

20. Nachrichtenübertragungseinrichtung nach Anspruch 19, bei der die Kontrollnachrichten an eine zweite Einheit Daten über die Verfügbarkeit von HF-Trägerfrequenzen für die zweite Einheit zwecks Verbindung mit der ersten Einheit aufweisen und die Verfügbarkeitsdaten abhängig davon aktualisiert werden, ob Verbindungen auf der oder auf jeder gewählten HF-Trägerfrequenz erfolgreich waren, wobei die Verfügbarkeitsdaten von Zeit zu Zeit erneut gesendet werden, um die zweite Einheit zu aktualisieren.

21. Nachrichtenübertragungseinrichtung nach Anspruch 19 oder Anspruch 20, bei der die einer zweiten Einheit zugewiesenen Funk-Trägerfreuenzen als für die Benutzung bevorzugt, für die Benutzung weniger bevorzugt und für die Benutzung am wenigsten bevorzugt klassifiziert werden.

22. Nachrichtenübertragungseinrichtung nach einem der Ansprüche 19 bis 21, bei der, falls eine als für die Benutzung bevorzugt klassifizierte HF-Trägerfrequenz nicht wählbar ist, versucht wird, eine weniger bevorzugte HF-Trägerfrequenz zu wählen.

23. Nachrichtenübertragungseinrichtung nach Anspruch 22, bei der, falls zum Senden an eine der zweiten Einheiten keine als weniger bevorzugt klassifizierte HF-Trägerfrequenz wählbar ist, alle den ersten und zweiten Einheiten zugewiesenen HF-Trägerfrequenzen geprüft werden, um eine für Sendungen der ersten Einheit benutzbare HF-Trägerfrequenz zu bestimmen, die zum Horchen geeignet ist.

24. Nachrichtenübertragungseinrichtung nach einem der Ansprüche 19 bis 23, bei der die HF-Frequenzen für jede zweite Einheit separat klassifiziert werden.

## Revendications

1. Procédé de transmission de messages de commande en tranches de temps prédéterminées à l'intérieur de cadres de temps de longueur fixe depuis une première unité de transmission et de réception vers une seconde unité de transmission et de réception, les messages de commande étant destinés à commander la seconde unité, la seconde unité écoutant sur une fréquence porteuse HF choisie un message entrant à un moment d'attente de réception, la fréquence porteuse HF étant choisie dans la classe des fréquences HF qui sont à la fois disponibles et d'un usage préféré, les fréquences HF étant classées selon que les communications sur des fréquences porteuses choisies antérieurement ont connu ou non le succès.

2. Procédé de transmission de messages de commande selon la revendication 1, selon lequel les messages de commande comprennent des données sur la disponibilité de fréquences porteuses HF vers la seconde unité pour communiquer avec la première unité, les données de disponibilité étant mises à jour selon que la communication sur la ou chaque fréquence porteuse HF choisie a connu ou non le succès, les données de disponibilité étant retransmises de temps en temps pour mettre à jour la seconde unité.

3. Procédé de transmission de messages de commande selon la revendication 1 ou la revendication 2, selon lequel les fréquences radio porteuses attribuées à une première unité sont chacune classées comme étant d'un usage préféré, d'un usage moins préféré ou d'un usage préféré moindre.

4. Procédé de transmission de messages de commande selon l'une quelconque des revendications 1 à 3, selon lequel si une fréquence porteuse HF classée comme étant d'un usage préféré ne peut pas être choisie, on essaye une fréquence porteuse HF moins préféré.

5. Procédé de transmission de messages de commande selon la revendication 4, selon lequel si aucune fréquence porteuse HF classée comme préférée ou moins préférée ne peut être choisie, la seconde unité analyse toutes les fréquences porteuses HF attribuées au réseau des première et seconde unités pour déterminer une fréquence porteuse HF, utilisable pour les transmissions par la première unité, sur laquelle écouter.

6. Procédé de transmission de messages de commande selon l'une quelconque des revendications précédentes, selon lequel la seconde unité est une unité de souscription et la première unité est une station de base.

7. Procédé de transmission de messages de commande selon l'une quelconque des revendications précédentes, selon lequel la transmission s'effectue par radio.

8. Procédé de transmission de messages de commande selon l'une quelconque des revendications précédentes, selon lequel la seconde unité écoute une demande d'établissement d'un appel ou un court message.

9. Procédé de transmission de messages de commande selon l'une quelconque des revendications précédentes, selon lequel il y a plusieurs secondes unités pour communiquer avec la première unité, les fréquences porteuses HF étant classées séparément pour chaque seconde unité.

10. Procédé de réception de messages de commande en tranches de temps prédéterminées à l'intérieur de cadres de temps de longueur fixe, depuis une première unité de transmission et de réception à une seconde unité de transmission et de réception, les messages de commande étant destinés à commander la seconde unité, la seconde unité écoutant sur une fréquence porteuse HF choisie un message entrant à un moment d'attente de réception, la fréquence porteuse HF ayant été choisie dans la classe des fréquences HF qui sont à la fois disponibles et d'un usage le plus préféré, les fréquences HF étant classées selon que les communications sur des fréquences porteuses antérieurement choisies ont connu ou non le succès.

11. Procédé de réception de messages de commande selon la revendication 10, selon lequel les messages de commande comprennent des données sur la disponibilité de fréquences porteuses HF vers la seconde unité pour communiquer avec la première unité, les données de disponibilité étant mises à jour selon que la communication sur la ou chaque fréquence porteuse HF choisie a connu le succès, les données de disponibilité étant reçues de temps en temps pour mettre à jour le récepteur.

12. Procédé de réception de messages de commande selon la revendication 10 ou la revendication 11, selon lequel les fréquences radio porteuses attribuées à une première unité sont classées comme étant d'usage préféré, d'usage moins préféré et d'usage préféré moindre.

13. Procédé de réception de messages de commande selon l'une quelconque des revendications 10 à 12, selon lequel si une fréquence porteuse HF classée comme étant d'usage préféré ne peut pas être choisie, on essaye de choisir une fréquence porteuse HF moins préférée.

14. Procédé de réception de messages de commande selon la revendication 13, selon lequel si aucune fréquence porteuse HF classée comme préférée ou moins préférée ne peut être choisie, la seconde unité analyse toutes les fréquences porteuses HF attribuées au réseau des première et seconde unités pour déterminer une fréquence porteuse HF, utilisable pour les transmissions par la première unité, sur laquelle écouter.

15. Un récepteur fonctionnant pour recevoir des messages de commande en des tranches de temps prédéterminées à l'intérieur de cadres de temps de longueur fixe depuis un émetteur, les messages de commande étant destinés à commander le récepteur, le récepteur écoutant sur une fréquence porteuse HF choisie un message entrant en un moment d'attente de réception, la fréquence porteuse HF choisie étant choisie dans la classe des fréquences étant à la fois disponible et d'un usage le plus préféré, les fréquences HF étant classées selon que les communications sur des fréquences porteuses antérieurement choisies ont connu ou non le succès.

16. Récepteur selon la revendication 15, dans lequel les fréquences radio porteuses sont classées comme étant d'un usage préféré, d'un usage moins préféré et d'un usage préféré moindre.

17. Récepteur selon la revendication 15 ou la revendication 16, dans lequel si une fréquence porteuse HF classée comme étant d'un usage préféré, ne peut pas être choisie, on essaye de choisir une fréquence porteuse HF moins préférée.

18. Récepteur selon la revendication 17, dans lequel si aucune fréquence porteuse HF classée comme étant moins préférée ne peut être choisie, le récepteur analyse toutes les fréquences porteuses HF attribuées à un réseau comprenant les émetteurs et les autres récepteurs pour déterminer une fréquence porteuse HF sur laquelle écouter.

19. Dispositif de communication comprenant une première unité de transmission et de réception et plusieurs secondes unités de transmission et de réception, la première unité transmettant des messages de commande, en des tranches de temps prédéterminées à l'intérieur de cadres de temps de longueur fixe, à chaque seconde unité, les messages de commande étant destinés à commander les secondes unités de réception, chaque seconde unité écoutant sur une fréquence porteuse HF choisie un message entrant à un moment d'attente de réception, la fréquence porteuse HF choisie étant choisie dans la classe des fréquences HF qui sont à la fois disponibles et d'un usage le plus préféré, les fréquences HF étant classées selon que des communications sur des fréquences porteuses antérieurement choisies ont connu ou non le succès.

20. Dispositif de communication selon la revendication 19, dans lequel les messages de commande vers une seconde unité comprennent des données sur la disponibilité de fréquences porteuses HF vers la seconde unité pour communiquer avec la première unité, les données de disponibilité étant mises à jour selon que la communication sur la ou chaque fréquence porteuse HF choisie a connu ou non le succès, les données de disponibilité étant retransmises de temps en temps pour mettre à jour la seconde unité.

21. Dispositif de communication selon la revendication 19 ou la revendication 20, dans lequel les fréquences radio porteuses attribuées à une seconde unité sont classées comme étant d'usage préféré, d'usage moins préféré et d'usage préféré moindre.

22. Dispositif de communication selon l'une quelconque des revendications 19 à 21, dans lequel si une fréquence porteuse HF classée comme étant d'usage préféré ne peut pas être choisie, on essaye de choisir une fréquence porteuse HF moins préférée.

23. Dispositif de communication selon la revendication 22, dans lequel si aucune fréquence porteuse HF classée comme moins préférée ne peut être choisie pour une transmission vers une seconde unité, la seconde unité analyse toutes les fréquences porteuses HF attribuées aux première et seconde unités pour déterminer une fréquence porteuse HF, pouvant être utilisée pour des transmissions par la première unité, sur laquelle écouter.

24. Dispositif de communication selon l'une quelconque des revendications 19 à 23, dans lequel les fréquences HF sont classées séparément pour chaque seconde unité.
